(19) Europäisches Patentamt / European Patent Office / Office européen des brevets

(11) **EP 1 959 678 A2**

(12) **EUROPEAN PATENT APPLICATION**

(43) Date of publication:
   **20.08.2008 Bulletin 2008/34**

(51) Int Cl.:
   **H04N 5/235** (2006.01)

(21) Application number: **07122307.7**

(22) Date of filing: **04.12.2007**

(84) Designated Contracting States:
   **AT BE BG CH CY CZ DE DK EE ES FI FR GB GR HU IE IS IT LI LT LU LV MC MT NL PL PT RO SE SI SK TR**
   Designated Extension States:
   **AL BA HR MK RS**

(30) Priority: **14.02.2007 KR 20070015336**

(71) Applicant: **Samsung Electronics Co., Ltd.**
   **Suwon-si, Gyeonggi-do 442-742 (KR)**

(72) Inventors:
   • **Kim, Il-do**
     **Seoul (KR)**

   • **Kim, Soo-young**
     **Suwon-si,**
     **Gyeonggi-do (KR)**
   • **Kim, Moon-cheol**
     **Suwon-si,**
     **Gyeonggi-do (KR)**

(74) Representative: **Walaski, Jan Filip et al**
   **Venner Shipley LLP**
   **20 Little Britain**
   **London EC1A 7DH (GB)**

(54) **Image pickup apparatus and method for extending dynamic range thereof**

(57) An image pickup apparatus and a method for extending a dynamic range thereof are provided. The image pickup apparatus includes a luminance and chrominance signal generator which generates a luminance signal and a chrominance signal; and a dynamic range extender which extends and outputs dynamic ranges for both the luminance signal and the chrominance signal, which are generated by the luminance and chrominance signal generator, based on current frame data and previous frame data. Therefore, a dynamic range for an image signal having a low gray level can be extended while an increase in noise can be prevented, by increasing the power of an output signal using current frame data and previous frame data.

FIG. 2

EP 1 959 678 A2

## Description

The present invention relates to image signal processing, to extending a dynamic range, and more particularly, to extending a dynamic range for an image signal having a low gray level while preventing an increase in noise, by increasing the power of an output signal using current frame data and previous frame data.

Image sensors, such as Complementary Metal Oxide Semiconductors (CMOSs), Charge Coupled Devices (CCDs) or other devices used in cameras or camcorders, are apparatuses which capture images and convert the images into electric signals. In such apparatuses, the noise level is high in comparison with the signal level, and fixed pattern noise (FPN) is generated due to various causes in the manufacturing process and the like. FPN is characterized by displaying various patterns, such as a white point defect, a black point defect, a mottled defect, a spotty defect or other patterns. When the light level is high, that is, when the photographing environment is bright, the noise level of an image sensor is low compared to an electric charge accumulated by photoelectrically converting the captured image, and thus only a small deterioration in the image quality can be observed. However, if the photographing environment becomes darker, levels of the fixed pattern noise, dark currents, kTC noise or the like may increase compared to the electric charge accumulated by photoelectrically converting the captured image, and thus problems arise due to noise.

Additionally, if the photographing environment becomes darker, it is hard to classify objects because the dynamic range becomes narrow. The dynamic range refers to the range in which a person can see objects under certain light conditions. For example, in bright sunlight, the dynamic range is approximately 120dB. However, a dynamic range of an image processed in an image processing system in which the above-described solid-state image sensors are generally used is only approximately 60dB. Accordingly, the dynamic range is narrower in a dark environment, and noise may also be generated. Thus, if the captured image signal has a low gray level, there is a need for a method of preventing an increase in noise while extending the dynamic range.

Accordingly, aspects of the present invention provide an image pickup apparatus and a method for extending a dynamic range so that the dynamic range for an image signal having a low gray level can be extended and an increase in noise can be prevented, by increasing the power of an output signal using current frame data and previous frame data.

According to an aspect of the present invention, there is provided an image pickup apparatus comprising a luminance and chrominance signal generator which generates a luminance signal and a chrominance signal; and a dynamic range extender which extends and outputs dynamic ranges for both the luminance and chrominance signals, which are generated by the luminance and chrominance signal generator, based on current frame data and previous frame data.

The dynamic range extender may comprise a motion detector which detects motion between frames; a data merging unit which generates and outputs the luminance and chrominance signals having the extended dynamic ranges by combining the current frame data and the previous frame data based on a result of detection by the motion detector, and adding the combined data to the current frame data at a predetermined addition rate; and a gain determiner which determines a gain value indicating the predetermined addition rate, and outputs the determined gain value to the data merging unit.

The gain determiner may determine the gain value based on the luminance signal generated by the luminance and chrominance signal generator.

The data merging unit may determine a combination rate of the current frame data with the previous frame data according to the magnitude of the motion detected by the motion detector.

The motion detector may use the sum of absolute differences (SAD) when detecting motion between frames.

The gain determiner may determine the gain value to be the maximum value among gain values within a preset range, if the luminance signal generated by the luminance and chrominance signal generator is less than a predetermined threshold.

The data merging unit may set the combination rate of the current frame data with the previous frame data so that the rate of the current frame data in the combination rate relative to the rate of the previous frame data in the combination rate can increase proportionally to the magnitude of motion detected by the motion detector.

According to another aspect of the present invention, there is provided a method for extending a dynamic range of an image pickup apparatus, comprising generating a luminance signal and a chrominance signal; and extending and outputting dynamic ranges for both the generated luminance signal and chrominance signal based on current frame data and previous frame data.

The above and other aspects of the present invention will be more apparent by describing certain exemplary embodiments of the present invention with reference to the accompanying drawings, in which:

FIG. 1 is a view schematically illustrating an image pickup apparatus according to an exemplary embodiment of the present invention;

FIG. 2 is a view illustrating a dynamic range extender according to an exemplary embodiment of the present invention;

FIG. 3 is a graph used to determine a gain value used by a dynamic range extender according to an exemplary embodiment of the present invention;

FIG. 4 is a graph used to determine a combination rate of current frame data with previous frame data according to an exemplary embodiment of the present invention; and

FIG. 5 is a flowchart illustrating a process for extending a dynamic range of an image pickup apparatus, according to an exemplary embodiment of the present invention.

Certain exemplary embodiments of the present invention will now be described in greater detail with reference to the accompanying drawings.

In the drawings, the same elements are denoted by the same reference numerals throughout the drawings. The matters defined in the description, such as detailed construction and elements, are provided to assist in a comprehensive understanding of the invention. Thus, it is apparent that the present invention can be carried out without those specifically defined matters. Also, detailed descriptions of known functions and configurations incorporated herein have been omitted for conciseness and clarity.

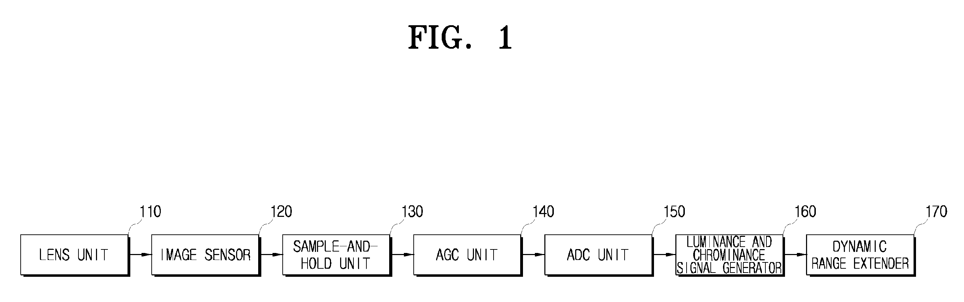

FIG. 1 is a view schematically illustrating an image pickup apparatus according to an exemplary embodiment of the present invention.

The image pickup apparatus according to an exemplary embodiment of the present invention comprises a lens unit 110, an image sensor 120, a sample-and-hold unit 130, an automatic gain controller (AGC) 140, an analog/digital converter (ADC) 150, a luminance and chrominance signal generator 160, and a dynamic range extender 170.

The lens unit 110 comprises a zoom lens which zooms in on or out from an object, a focus lens which focuses on an object, and an aperture which adjusts the amount of light entering through the lens. The lens unit 110 receives light from the object and transmits the light to the image sensor 120.

In the image sensor 120, a plurality of pixels which convert light into an electric signal are arranged. The image sensor 120, for example, is a Charge Coupled Device (CCD). The image sensor 120 converts the light from the object received through the lens 110 into an electric signal for each pixel, and transmits the converted signals as an analog image signal to the sample-and-hold unit 130. The sample-and-hold unit 130 performs sampling of the analog image signal transmitted from the image sensor 120, and sends the sampled signal to the AGC 140.

The AGC 140 amplifies the analog image signal sampled by the sample-and-hold unit 130 and transmits the amplified signal to the ADC 150.

The ADC 150 converts the analog image signal amplified by the AGC 140 into red (R), green (G) and blue (B) digital image signals, and transmits the converted signals to the luminance and chrominance signal generator 160.

The luminance and chrominance signal generator 160 generates a luminance signal Y and chrominance signals Cb and Cr from the R, G and B digital image signals transmitted from the ADC 150, and outputs the generated signals to the dynamic range extender 170.

The dynamic range extender 170 extends and outputs dynamic ranges for both the luminance and chrominance signals generated by the luminance and chrominance signal generator 160, based on current frame data and previous frame data.

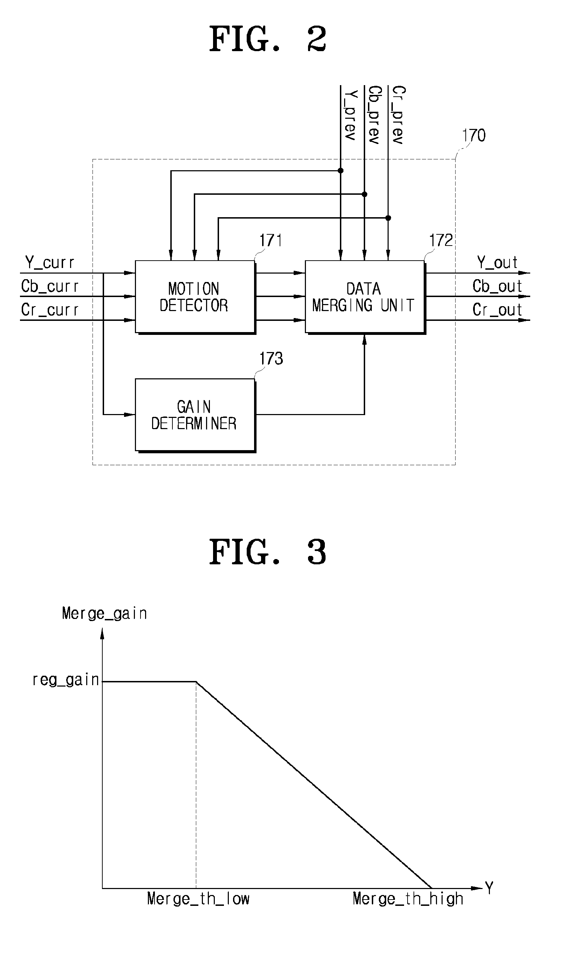

FIG. 2 is a view illustrating the dynamic range extender 170 according to an exemplary embodiment of the present invention.

The dynamic range extender 170 comprises a motion detector 171, a data merging unit 172, and a gain determiner 173.

The motion detector 171 detects motion between frames.

The data merging unit 172 combines the current frame data and the previous frame data based on the result of detection by the motion detector 171, and adds the combined data to the current frame data at a predetermined addition rate.

Accordingly, the luminance and chrominance signals having the extended dynamic ranges may be generated and output.

The gain determiner 173 determines a gain value indicating the addition rate, and outputs the determined gain value to the data merging unit 172.

The data merging unit 172 may generate an output signal having an extended dynamic range using the following Equation 1.

[Equation 1]

$$Out\_data = Cur\_data + Merge\_gain * Merge\_data$$

In Equation 1, Out_data represents an output signal, Cur_data represents current frame data, and Merge_data represents data generated by the data merging unit 172 and refers to data obtained by combining the current frame data and the previous frame data based on the result of detection by the motion detector 171.

Additionally, Merge_gain represents a gain value determined by the gain determiner 173 and indicates an addition rate of the combined data added to the current frame data when adding the combined data to the current frame data.

The gain determiner 173 determines Merge_gain based on the luminance signal generated by the luminance and chrominance signal generator 160. FIG. 3 shows a graph used to determine Merge_gain by the gain determiner 173.

Referring to FIG. 3, if a current frame luminance Y generated by the luminance and chrominance signal generator 160 is greater than a high threshold Merge_th_high, Merge_gain may be set to be "0". Additionally, if the current frame luminance Y is less than a low threshold Merge_th_low, Merge_gain may be set to be "reg_gain", that is, the maximum value among gain values within a preset range. The value of "reg_gain" may be set to be "1", but may be changed by a designer.

Accordingly, Merge_gain is inversely proportional to the luminance value of the current frame data of a pixel at an interval between the low threshold Merge_th_low and high threshold Merge_th_high, and thus the power of a dark pixel may increase so that the dynamic range can be extended.

Additionally, the data merging unit 172 may compute Merge_data of Equation 1 using the following Equation 2.

[Equation 2]

$$Y\_merge = Curr\_gain * Y\_curr + \mathrm{Pr}ev\_gain * Y\_prev$$
$$Cb\_merge = Curr\_gain * Cb\_curr + \mathrm{Pr}ev\_gain * Cb\_prev$$
$$Cr\_merge = Curr\_gain * Cr\_curr + \mathrm{Pr}ev\_gain * Cr\_prev$$

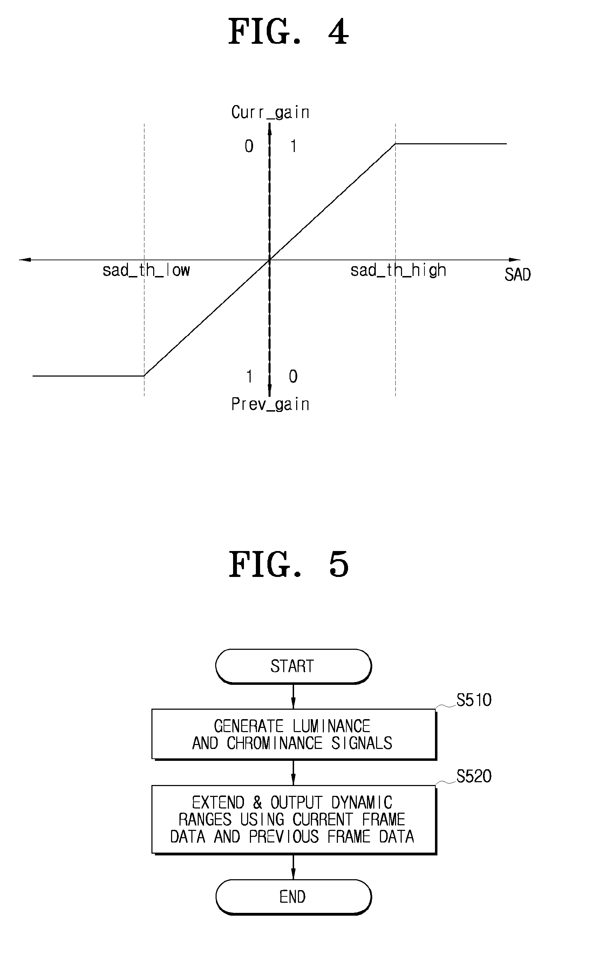

In Equation 2, Merge_data for each of the luminance and chrominance signals Y, Cb and Cr indicates values obtained by adding a value obtained by multiplying current frame data Y_curr, Cb_curr and Cr_curr for each signal by a current frame gain value Curr_gain to a value obtained by multiplying previous frame data Y_prev, Cb_prev and Cr_prev for each signal by a previous frame gain value Prev_gain. In other words, the current frame data and the previous frame data may be combined based on a predetermined combination rate, that is, Curr_gain and Prev_gain. The combination rate, that is, the current frame gain value Curr_gain and the previous frame gain value Prev_gain, may be computed based on a graph shown in FIG. 4.

In FIG. 4, the current frame gain value Curr_gain and the previous frame gain value Prev_gain, that is, the combination rate of the current frame data with the previous frame data may be determined on the basis of the sum of absolute differences (SAD), that is, the magnitude of the motion detected by the motion detector 171.

The SAD represents a sum of difference values between blocks obtained by the difference between the current frame luminance Y and previous frame luminance Y, and accordingly it is possible to check the magnitude of the motion. Therefore, it is determined that a larger SAD reflects greater motion, and a lower SAD reflects smaller motion.

Referring to FIG. 4, if the SAD is greater than a high threshold sad_th_high, the current frame gain value Curr_gain may be set to be "1" and the previous frame gain value Prev_gain may be set to be "0". On the other hand, if the SAD is less than a low threshold sad_th_low, the current frame gain value Curr_gain may be set to be "0" and the previous frame gain value Prev_gain may be set to be "1". In other words, if the SAD is greater than the high threshold, Merge_data may be set centered on the current frame data, and if the SAD is less than the low threshold, Merge_data may be set centered on the previous frame data. This is because the high SAD reflects the current frame representing motion greater than in the previous frame, so Merge_data is set centered on the current frame in order to reduce distortion of an image.

Additionally, the data merging unit 172 generates luminance and chrominance signals having extended dynamic ranges for each luminance/chrominance signal generated by the luminance and chrominance signal generator 160, and outputs the generated luminance and chrominance signals, using the following Equation 3 based on the above-computed value.

[Equation 3]

$$Y\_out = Y\_curr + Merge\_gain * Y\_merge$$
$$Cb\_out = Cb\_curr + Merge\_gain * Cb\_merge$$
$$Cr\_out = Cr\_curr + Merge\_gain * Cr\_merge$$

Equation 3 represents each signal shown in Equation 1. As described above, a rate at which data is added to the current frame data by taking the motion magnitude and brightness into consideration is adjusted. Therefore, it is possible to prevent image distortion, and an output signal without noise can be generated while extending the dynamic range.

In addition, the image pickup apparatus according to an exemplary embodiment of the present invention may comprise a storage unit (not shown) which stores the previous frame data combined with the current frame data.

FIG. 5 is a flowchart illustrating a process for extending the dynamic range of the image pickup apparatus according to the exemplary embodiment of the present invention.

In FIG. 5, luminance and chrominance signals are generated by the luminance and chrominance signal generator 160 (S510). Dynamic ranges for both the generated luminance and chrominance signals are extended and output using the current frame data and the previous frame data (S520).

Additionally, operation S520 comprises detecting motion between frames; combining the current frame data and the previous frame data based on the result of motion detection, and adding the combined data to the current frame data according to the predetermined addition rate to generate luminance and chrominance signals having extended dynamic ranges and output the generated luminance and chrominance signals; and determining a gain value indicating the predetermined addition rate.

Motion is detected using the SAD, but the present invention is not limited thereto. Thus, other known techniques can be used in motion detection. The combination rate of the current frame data with the previous frame data is determined according to the motion magnitude determined using the SAD.

The gain value indicating the ratio at which the combined data is added to the current frame data is determined based on the luminance signal generated by the luminance and chrominance signal generator 160. Accordingly, in the case of a dark pixel, the power of the output signal may increase by increasing the gain value, and thus the dynamic range may be extended. The noise increase rate is relatively low for the dynamic range extension rate. This is because image data shows a strong association between frames, but noise shows a weak association between frames, so if the power of an output signal is increased using the current frame data and previous frame data, the dynamic range may be greatly extended, whereas the noise may slightly increase.

The exemplary embodiment of the present invention as described above provides the image pickup apparatus and the method for extending the dynamic range thereof, in which the power of the output signal is increased using the current frame data and previous frame data so that the dynamic range for an image signal having a low gray level can be extended while an increase in noise is prevented.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art, while still falling within the scope of the claims.

**Claims**

1. An image pickup apparatus comprising:

   a luminance and chrominance signal generator (160) for generating a luminance signal and a chrominance signal; and
   a dynamic range extender (170) for extending dynamic ranges for both the luminance signal and the chrominance signal, based on current frame data and previous frame data.

2. The apparatus as claimed in claim 1, wherein the dynamic range extender (170) comprises:

a motion detector (171) for detecting motion between frames;

a data merging unit (172) for generating and outputting the luminance signal and the chrominance signal having the extended dynamic ranges by combining the current frame data and the previous frame data based on a result of detection by the motion detector (171), and for adding the combined data to the current frame data at a predetermined addition rate; and

a gain determiner (173) for determining a gain value indicating the predetermined addition rate, and outputting the determined gain value to the data merging unit (172).

3. The apparatus as claimed in claim 2, wherein the gain determiner is arranged to determine the gain value based on the luminance signal generated by the luminance and chrominance signal generator.

4. The apparatus as claimed in claim 2 or 3, wherein the data merging unit is arranged to determine a combination rate of the current frame data with the previous frame data according to a magnitude of the motion detected by the motion detector.

5. The apparatus as claimed in any one of claims 2, 3 or 4, wherein the motion detector is arranged to use a sum of absolute differences (SAD) when detecting motion between frames.

6. The apparatus as claimed in any one of claims 2 to 5, wherein the gain determiner is arranged to determine the gain value to be a maximum value among gain values within a preset range, if the luminance signal generated by the luminance and chrominance signal generator is less than a predetermined threshold.

7. The apparatus as claimed in any one of claims 2 to 6, wherein the gain determiner is arranged to determine the gain value to be a minimum value among gain values within a preset range, if the luminance signal generated by the luminance and chrominance signal generator is greater than a predetermined threshold.

8. The apparatus as claimed in claim 4, wherein the data merging unit is arranged to set the combination rate of the current frame data with the previous frame data so that a rate of the current frame data in the combination rate relative to a rate of the previous frame data in the combination rate increases proportionally to the magnitude of motion detected by the motion detector.

9. A method of extending a dynamic range of an image pickup apparatus, comprising:

generating a luminance signal and a chrominance signal; and

extending dynamic ranges for both the generated luminance signal and the generated chrominance signal based on current frame data and previous frame data.

10. The method as claimed in claim 9, comprising:

detecting motion between frames;

generating the luminance signal and the chrominance signal having the extended dynamic ranges by combining the current frame data and the previous frame data based on a result of the detected motion to generate a combined data and by adding the combined data to the current frame data at a predetermined addition rate, and outputting the generated luminance signal and the generated chrominance signal; and

determining a gain value indicating the predetermined addition rate.

11. The method as claimed in claim 10, wherein determining the gain value comprises determining the gain value based on the generated luminance signal.

12. The method as claimed in claim 10 or 11, wherein generating the luminance signal and the chrominance signal comprises determining a combination rate of the current frame data with the previous frame data according to a magnitude of the detected motion.

13. The method as claimed in claim 10, 11 or 12, comprising using a sum of absolute differences (SAD) when detecting motion between frames.

14. The method as claimed in any one of claims 10 to 13, wherein determining the gain value comprises determining the gain value to be a maximum value among gain values within a preset range, if the luminance signal generated by the luminance and chrominance signal generator is less than a predetermined threshold.

15. The method as claimed in any one of claims 10 to 14, wherein determining the gain value comprises determining the gain value to be a minimum value among gain values within a preset range, if the luminance signal generated by the luminance and chrominance signal generator is greater than a predetermined threshold.

16. The method as claimed in claim 12, wherein generating the luminance signal and the chrominance signal comprises setting the combination rate of the current frame data with the previous frame data so that a rate of the current frame data in the combination rate relative to a rate of the previous frame data in the combination rate increases proportionally to the magnitude of the detected motion.

EP 1 959 678 A2

# FIG. 1

| LENS UNIT | → | IMAGE SENSOR | → | SAMPLE-AND-HOLD UNIT | → | AGC UNIT | → | ADC UNIT | → | LUMINANCE AND CHROMINANCE SIGNAL GENERATOR | → | DYNAMIC RANGE EXTENDER |
|---|---|---|---|---|---|---|---|---|---|---|---|---|

110　　　120　　　130　　　140　　　150　　　160　　　170

# FIG. 2

Y_prev
Cb_prev
Cr_prev

170

Y_curr
Cb_curr
Cr_curr

171

MOTION
DETECTOR

172

DATA
MERGING UNIT

Y_out
Cb_out
Cr_out

173

GAIN
DETERMINER

# FIG. 3

Merge_gain

reg_gain

Merge_th_low          Merge_th_high          Y

# FIG. 4

# FIG. 5